(19) Europäisches Patentamt
European Patent Office
Office européen des brevets

(11) **EP 0 969 997 B1**

(12) **EUROPÄISCHE PATENTSCHRIFT**

(45) Veröffentlichungstag und Bekanntmachung des Hinweises auf die Patenterteilung:
**31.10.2001 Patentblatt 2001/44**

(51) Int Cl.⁷: **B61F 5/38**, B61F 5/44, B61D 3/10

(21) Anmeldenummer: **98917003.0**

(22) Anmeldetag: **18.03.1998**

(86) Internationale Anmeldenummer:
**PCT/EP98/01590**

(87) Internationale Veröffentlichungsnummer:
**WO 98/42557 (01.10.1998 Gazette 1998/39)**

(54) **SCHIENENFAHRZEUG MIT KNICKGELENK**

RAIL VEHICLE WITH AN ARTICULATED JOINT

VEHICULE SUR RAIL AVEC ARTICULATION PIVOTANTE

(84) Benannte Vertragsstaaten:
**AT BE CH DE ES FI FR GB IT LI NL**

(30) Priorität: **26.03.1997 DE 19712752**

(43) Veröffentlichungstag der Anmeldung:
**12.01.2000 Patentblatt 2000/02**

(73) Patentinhaber: **DaimlerChrysler Rail Systems GmbH**
**13627 Berlin (DE)**

(72) Erfinder:
• **STRASSER, Andreas**
**D-90431 Nürnberg (DE)**
• **HACHMANN, Ulrich**
**D-90602 Pyrbaum (DE)**

(74) Vertreter: **Cohausz & Florack Patentanwälte**
**Postfach 33 02 29**
**40435 Düsseldorf (DE)**

(56) Entgegenhaltungen:
**EP-A- 0 692 421      DE-A- 2 060 231**
**DE-A- 2 854 776**

**Beschreibung**

Die Erfindung betrifft ein Schienenfahrzeug gemäß dem Oberbegriff des ersten Anspruchs eine Verwendung dieses Schienenfahrzeuges gemäß Anspruch 2, sowie ein Verfahren zur Steuerung des Knickwinkels bei einem derartigen Schienenfahrzeug gemäß dem Oberbegriff des Anspruchs 3.

Bei einem bekannten Schienenfahrzeug dieser Art (DE-A 2060231) sind zwei Wagenkästen über ein einachsiges Knickgelenk miteinander gekuppelt. Die Wagenkästen stützen sich hier jeweils auf einem etwa in Wagenkastenmitte angeordneten mehrachsigen Drehgestell ab. Die Drehgestelle sind gegenüber dem zugehörigen Wagenkasten um eine vertikale Achse schwenkbar. Die Wagenkästen sind zu beiden Seiten des Knickgelenks über steuerbare Glieder miteinander gekuppelt. Die Steuerung der Stellglieder erfolgt dabei abhängig von Potentiometern als Steuermittel, welche den Verdrehwinkel zwischen dem jeweiligen Drehgestell und dem zugehörigen Wagenkasten sowie den Knickwinkel des Knickgelenks erfassen. Die Steuerung der Stellglieder erfolgt in der Weise, daß die Verdrehwinkel jeweils gleich groß sind. Bei diesem Aufbau zeigt es sich, daß die Stellglieder zueinander zur Erzeugung einer ausreichenden Stellkraft wegen der kurzen nutzbaren Hebelarme und der großen zu bewegenden Masse sehr leistungsstark ausgebildet sein müssen. Zudem müssen auch die mechanischen Ankuppelstellen den auftretenden hohen Kräften entsprechend stark bemessen werden und aufgrund der Massenträgheit erfolgt die Nachstellung der Verdrehwinkel nur sehr verzögert.

Ein weiteres Schienenfahrzeug (DE-A 2854776) ist insbesondere als Straßenbahnzug ausgebildet und besteht aus zwei Wagenkästen , von welchen jeder auf einem etwa in Wagenlängsmitte angeordneten zweiachsigen Drehgestell abgestützt ist. Die beiden Wagenkästen sind an ihren aneinander zugewandten Enden über ein Knickgelenk gekuppelt,dessen einzige Schwenkachse senkrecht verläuft. Der Verdrehwinkel zwischen dem jeweiligen Drehgestell und dem zugehörigen Wagenkasten wird dabei mittels einer Steuermechanik mit angekuppeltem Wegstreckengeber und der Knickwinkel über mindestens einen dem Knickgelenk zugeordneten Wegstreckengeber ermittelt. Die von den Wegstreckengebern generierten Signale werden einer Steuereinheit zugeführt, welche ein asymmetrisch oder zwei symmetrisch zum Knickgelenk angeordneten Stellglieder steuert. Der Knickwinkel des Knickgelenks wird dabei so beeinflußt, daß die zweiachsigen, drehzapfenlosen Drehgestelle, auf welchen die Wagenkästen über elastische Sekundärfedern abgestützt sind, vollkommen von der Funktion des Kraftspenders befreit werden sollen. Hierbei blockiert die Stellgliedanordnung das Knickgelenk bei Geradeausfahrt in einer Stellung über Gleisstrassenmitte und erzwingt bei Bogenfahrt das Ausknicken des Knickgelenks zur Bogenausseite der Gleisstrasse, um eine verbesserte Nutzung des Lichtraumes bei Kurvenfahrt des Schienenfahrzeuges zu erreichen.

Aufgabe der Erfindung ist es, ein gattungsgemäßes Schienenfahrzeug und ein Verfahren zur Steuerung desselben anzugeben, durch welche die Wagenkästen bei dynamischer Fahrt unter verbesserter Krafteinleitung jeweils in eine Stellung zueinander gesteuert werden, die der statischen Lage im aktuellen Gleisabschnitt entspricht.

Die Lösung dieser Aufgabe erfolgt gemäß der Erfindung durch die kennzeichnenden Merkmale des ersten, zweiten bzw. des dritten Anspruchs.

Bei einer Ausgestaltung eines Schienenfahrzeugs gemäß der Erfindung werden einerseits der aktuelle Knickwinkel des Knickgelenks und andererseits die Verdrehwinkel zwischen den Drehgestellen und den zugehörigen Wagenkästen ermittelt. die aktuellen Istwerte dieser Winkel werden vorzeichengerecht addiert, wobei der Verdrehwinkel zwischen dem in Fahrtrichtung ersten Drehgestell und dem zugehörigen Wagenkasten negiert wird. Das Summenergebnis dieser Addition ist das Maß für den Soll-Knickwinkel,den das Gelenk unter den aktuellen Betriebsbedingungen einnehmen soll. Solange demnach z.B. auf geradem Gleis die Summe der aktuellen Verdrehwinkel vom aktuellen Knickwinkel abweicht, wird über mechanische Stellglieder der Ausknickung des Knickgelenks entgegengewirkt. Diese Stellglieder können zwischen Drehgestell und zugehörigem Wagenkasten vorgesehen sein und durch Verändern des Istwertes des Verdrehwinkels zwangsläufig den Knickwinkel des Knickgelenks beeinflussen. Vorzugsweise werden sowohl dem Knickgelenk als auch den Drehgestellen/Wagenkästen zugeordnete Stellglieder eingesetzt. Insbesondere kann es sich bei den Stellgliedern um gesteuerte Dämpfungselemente handeln, die einer Veränderung der Drehwinkel solange entgegenwirken, wie die von außen einwirkenden Kräfte eine vom Sollwert weglaufende Istwertveränderung hervorrufen. Wird dagegen festgestellt, daß sich der Istwert auf den Sollwert zubewegt, wird die Dämpfungswirkung der Dämpfungselemente aufgehoben. Bewegt sich der Istwert zu schnell auf den Sollwert zu, sodaß ein Überschwingen zu erwarten ist, wird die Istwertänderung durch das Einschalten der Dämpfungswirkung kurz vor Erreichen des Sollwertes abgebremst. Im Falle einer bleibenden oder unverändert zunehmenden Soll-Ist-Abweichung trotz entgegenwirkender Dämpfungselemente, muß eine Traktionsanweisung entweder an ein zentrales Steuergerät oder an den Fahrer des Schienenfahrzeugs ausgegeben werden, wonach beispielsweise bei einer zu starken Knickung das nachlaufende Drehgestell gebremst bzw. der vorlaufende Wagen beschleunigt wird

Weiterhin kann es sich bei den Stellgliedern um aktive Stellelemente handeln, die nicht nur vom Sollwert weglaufenden Istwertänderungen entgegenwirken, sondern auch im Falle fehlender äußerer Rückstellkräfte die Rückführung des Istwertes auf den Sollwert bewirken.

Bei der Messung der Verdrehwinkel und des Knickwinkels wird sinnvollerweise eine Vorzeichendefinition festgelegt, bei der z. B. jeweils vom Wert Null ausgegangen wird, wenn die Längsachse des jeweiligen Drehgestells parallel zur Längsachse des zugehörigen Wagenkastens steht und die Wagenkastenlängsachsen in einer Flucht liegen. Positive Verdrehwinkel treten demnach dann auf, wenn die Wagenkastenlängsachse im Uhrzeigersinn gegenüber der zugehörigen Drehgestellängsachse verdreht ist. Negative Verdrehwinkel werden demnach dann gemessen, wenn die Wagenkastenlängsachse im Gegenuhrzeigersinn gegenüber der Drehgestellängsachse verdreht ist. Negative Werte für den Knickwinkel treten auf, wenn der vorlaufende Wagenkasten im Gegenuhrzeigersinn gegenüber dem nachlaufenden Wagenkasten abknickt. Positive Werte des Knickwinkels treten demnach dann auf, wenn die Längsachse des ersten Wagenkastens im Uhrzeigersinn gegenüber der Längsachse des zweiten Wagenkastens abknickt.

Ein zweigliedriges Schienenfahrzeug mit einem Knickgelenk mit einer senkrechten Drehachse zwischen den beiden Wagenkästen und elastischen Rückstellelementen zwischen Wagenkasten und jeweiligem Drehgestell beansprucht den geringsten Lichtraum in der statischen Ruhestellung. Für diesen Zustand wurde festgestellt, daß die Verdrehwinkel bei Stillstand des Zuges auf einer beliebigen realen Gleistrasse näherungsweise gleich sind. Bei einem so ausgestatteten Schienenfahrzeug kann zur Steuerung des Knickwinkels so verfahren werden, daß zunächst die aktuellen Verdrehwinkel zwischen den Drehgestellen und dem jeweils zugehörigen Wagenkasten sowie der aktuelle Knickwinkel am Knickgelenk unter Beachtung des positiven oder negativen Vorzeichens der Winkel zumindest während des Fahrbetriebes wiederholt gemessen werden. Durch Summenbildung dieser Winkelwerte wird im Steuergerät entsprechend dem Sollwert für den Knickwinkel ein Stellsignal generiert, das bei Abweichung vom tatsächlich am Knickgelenk gemessenen Knickwinkel eine der Knickwinkelabweichung entgegenwirkende mechanische Kraftkomponente steuert. Diese Kraftkomponente wird unmittelbar am Knickgelenk wirksam. Abweichungen von dem idealen, dem minimalen Lichtraumbedarf entsprechenden Knickwinkel können im Betrieb durch unterschiedliche Traktionskräfte an den Drehgestellen, bei ungleich wirkenden Bremsen, bei Gleisfehlern, Durchdrehen eines Antriebsrades, beim Einlauf aus der Geraden in ein gekrümmtes Bogenstück infolge der dann wirksamen dynamischen Trägheitskräfte, im Schubbetrieb oder dergleichen auftreten.

Werden zwei oder mehrere derart gesteuerte zweiteilige Züge mittels je einer Koppelstange aneinandergehängt, wobei die Koppelstangen jeweils über ein Gelenk am zweiten Wagen des vorlaufenden Zuges und am ersten Wagen des nachlaufenden Zuges angelenkt sind, dann werden alle gekoppelten Züge für sich nach dem gleichen Steuerprinzip betrieben.

Ferner kann es zweckmäßig sein, zumindest einen der Verdrehwinkel durch Stellglieder zu beeinflussen, um den beanspruchten Lichtraum zu minimieren. Dabei wird der Verdrehwinkel auf einen Sollwert hin gesteuert, der dem arithmetischen Mittelwert der aktuell im dynamischen Betrieb gemessenen beiden Verdrehwinkel entspricht.

Die Erfindung ist nachfolgend anhand der Prinzipskizzen eines Ausführungsbeispiels näher erläutert.

Es zeigen:

Fig.1: ein zweigliedriges Schienenfahrzeug mit Stell- und Steuermitteln zur Erfassung von Winkeln sowie zur Gegensteuerung,

Fig.2: das Schienenfahrzeug auf gerader Strecke bei geknickt zueinanderstehenden Wagenkastenlängsachsen und

Fig.3: das Schienenfahrzeug in einem Gleisbogen.

Bei einem Schienenfahrzeug sind zwei Wagenkästen 1, 2 vorgesehen, die jeder auf nur einem etwa in Wagenkastenlängsmitte angeordneten zweiachsigen drehzapfenlosen Drehgestell 4 über jeweils zwei elastische Sekundärfederelemente 5 auflagern. Die Sekundäfederelemente 5 sind ihrerseits auf einer quer zur Längsachse des jeweiligen Wagenkastens liegenden Linie angeordnet. Die Sekundärfedern 5 lassen neben ihrer vertikalen Federeigenschaft zusätzlich eine Verdrehung um eine virtuelle vertikale Achse und eine begrenzte Querverschiebung zu. Der jeweilige Wagenkasten 1, 2 kann sich dadurch in einer parallelen Ebene zum zugehörigen Drehgestell 4 in begrenztem Maß verdrehen und seitlich verschieben. Dabei ist eine Verschiebung des Drehgestells 4 in Längsrichtung des Wagenkastens durch zumindest einen in Längsrichtung stehenden, schwenkbeweglich am Drehgestell 4 wie am Wagenkasten 1,2 angelenkten Lenker unterbunden, der jeweils die in Wagenkastenlängsrichtung auftretenden Traktionskräfte zwischen Drehgestell 4 und Wagenkasten 1 bzw. 2 überträgt. Die Sekundärfedern 5 ermöglichen somit ein Verdrehen der Längsachse des Drehgestells gegenüber der Längsachse des zugehörigen Wagenkastens um den Winkel A1 bzw. A2 , die an den einzelnen Wagen im Betrieb in der Regel unterschiedlich groß sein können. Zur Erfassung dieser Winkel A ist jeweils ein Verdrehwinkelgeber 6 vorgesehen, der einerseits mit dem zugehörigen Wagenkasten 1, 2 und andererseits mit dem zugehörigen Drehgestell 4 gekoppelt ist. Die Verdrehwinkelgeber 6 erzeugen abhängig vom jeweiligen Verdrehwinkel A Verdrehwinkel- Istwertsignale V 1, V 2, die als Eingangssignale einer Steuereinheit 7 zugeführt werden .

Die Verdrehwinkelgeber 6 erzeugen bei fluchtenden Längsachsen von Drehgestell 4 und zugehörigem Wagenkasten 1 , 2 einen Wert, der dem Verdrehwinkel A von null Grad entspricht. Dreht der Wagenkasten gegenüber dem Drehgestell im Uhrzeigersinn aus, wird ein Signal generiert, das einem positiven Verdrehwinkel entspricht; dreht der Wagenkasten gegenüber dem zugehörigen Drehgestell entgegen dem Uhrzeigersinn aus, wird ein Signal für einen entsprechenden negativen Winkelwert ausgegeben.Die Wagenkästen 1, 2 sind jeweils über ein einziges Knickgelenk 8 miteinander verbunden, das eine senkrechte Gelenkachse aufweist. Dem Knickgelenk ist ein Knickwinkelgeber 9 zugeordnet, der bei in einer Linie liegenden Längsachsen der Wagenkästen 1, 2 ein Knickwinkelsignal generiert, das dem Knickwinkel null Grad entspricht. Schwenkt die Längsachse des Wagenkastens 2 gegenüber der Längsachse des Wagenkasten 1 im Gegenuhrzeigersinn, wird ein Knickwinkelsignal generiert, das einem positiven Knickwinkel entspricht. Knickt die Längsachse des zweiten Wagenkastens dagegen im Uhrzeigersinn gegenüber der Längsachse des Wagenkastens 1 ab, wird ein Knickwinkelsignal entsprechend einem negativen Knickwinkel erzeugt. Die vom Knickwinkelgeber 9 erzeugten Istwertsignale K werden ebenfalls als Eingangs-signale der Steuereinheit 7 zugeführt.In der Steuereinheit 7 wird der Sollwert für den Knickwinkel K dadurch ermittelt, das unter Beachtung der positiven oder negativen Vorzeichen der gemessenen Winkel eine Summenbildung der Istwerte der Verdrehwinkel A1 und A2 sowie des Knickwinkels K durchgeführt wird entsprechend der Beziehung

$$K \text{ soll} = K \text{ ist} + A2 - A1.$$

Das Ergebnis dieser Summation wird in ein Steuersignal umgesetzt, welches über mechanische Kräfte erzeugende Stellglieder auf das Knickgelenk 8 einwirken. Zur Beeinflussung des Knickwinkels K sind als Stellglieder symmetrisch zum Knickgelenk 8 zwischen den einander zugewandten Enden der benachbarten Wagenkästen 1, 2, angeordnete steuerbare hydraulische Aktorelemente 10 vorgesehen, mit welchen eine Kraftkomponente zwischen den benachbarten Wagenkästen 1, 2 erzeugt werden kann, welche entsprechend dem zugehörigen Steuersignal eine funktionsgerechte Vergrößerung oder Verkleinerung des Knickwinkels K-ist bewirkt. Wenn außer dem Knickwinkel K auch zumindest einer der Verdrehwinkel A1 und/oder A2 gesteuert wird, dann wird aus den beiden aktuell gemessenen dynamischen Verdrehwinkelwerten der arithmetische Mittelwert gebildet und mittels zugehöriger Aktoren 11 der oder beide Verdrehwinkel am jeweiligen Drehgestell/Wagenkasten unter Beachtung der jeweils gewählten Vorzeichendefinition auf diesen Mittelwert hin gesteuert. Dabei wird davon ausgegangen, daß die beiden Verdrehwinkel A1 und A2 bei Beanspruchung des minimalen Lichtraumes näherungsweise gleich groß sind. Die von den Aktoren 11 erzeugten Kraftkomponenten wirken jeweils der Abweichung entgegen.

Diese Aktorelemente 11 stehen in symmetrischer Anordnung einerseits mit dem jeweiligen Drehgestell 4 und andererseits mit dem zugehörigen Wagenkasten 1, 2 in Wirkverbindung, um eine Verdrehung derselben gegeneinander entspechend dem geforderten Knickwinkel durchführen zu können. Dabei reicht ggf. auch eine Aktoranordnung an nur einem Drehgestell.

Jedes Aktorelement 10 ist mit einem Aktor-Steuereingang AST ausgestattet, die an entsprechende Aktor-Steuerausgänge AST1 und AST2 der Steuereinheit 7 angeschlossen sind. Die Aktor-Elemente 11 weisen ebenfalls Steuereingänge S auf, die ihrerseits an entsprechende Steuerausgänge S 1 bis S 4 der Steuereinheit 7 angeschlossen sind. Dabei können jeweils die Steuereingänge für die Aktoren 11 eines Drehgestells 4 parallel geschaltet sein, um eine unsymmetrische Verdrehung des Drehgestells unter der Wirkung dieser Aktoren 11 zu verhindern.

Die Räder der beiden Radsätze jedes Drehgestells 4 laufen spurgebunden in einer Gleistrasse 13, so daß das zugehörige Drehgestell zwangsläufig eine durch den aktuell befahrenen Gleisabschnitt bestimmte Lage einnimmt. Diese Lage entspricht im wesentlichen der Tangente an den Gleisbogenabschnitt 13 im Bereich des betreffenden Drehgestells 4. Infolge der am Knickgelenk 8 gekoppelten Wagenkästen 1, 2 können sich dieselben im dynamischen Fahrbetrieb nicht frei entsprechend der Stellung des Drehgestells ausrichten. Es ergibt sich dadurch eine Verdrehung der Sekundärfedern 5 um eine virtuelle vertikale Achse und in der Regel auch eine leichte Verschiebung quer zur Wagenkastenlängsachse WKL1 bzw. WKL2. Diese Verdrehung und Querverschiebung muß von den jeweiligen Paaren der Sekundärfedern 5 aufgenommen werden, d. h. die Sekundärfedern 5 speichern die sich daraus ergebende Energie. Im statischen Zustand, also bei ungebremst stehendem Schienenfahrzeug nimmt die Summe dieser Einzelenergien einen Minimalwert an. Im Fahrbetrieb wird diese Energie aufgrund zusätzlich einwirkender dynamischer Kräfte verändert. Dementsprechend ist der vom gesamten Schienenfahrzeug beanspruchte Lichtraum im statischen Betrieb ein Minimum und erreicht im Fahrbetrieb Werte, die den im statischen Betrieb beanspruchten Lichtraum überschreiten können. Um dem entgegenwirken zu können, wird bei der Steuerung so verfahren, daß die Wagenkästen 1, 2 im dynamischen Fahrbetrieb abhängig von den aktuell gemessenen Istwerten der Verdrehwinkel A und des Knickwinkels K in eine an sich dem statischen Zustand entsprechende Stellung mit Hilfe der Aktoren 10 und gegebenenfalls 11 gesteuert werden.

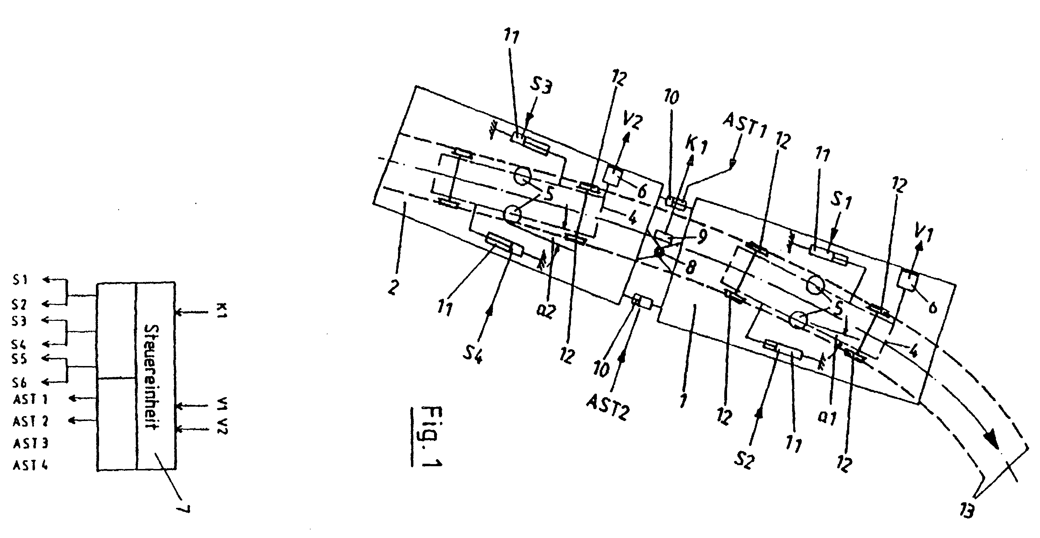

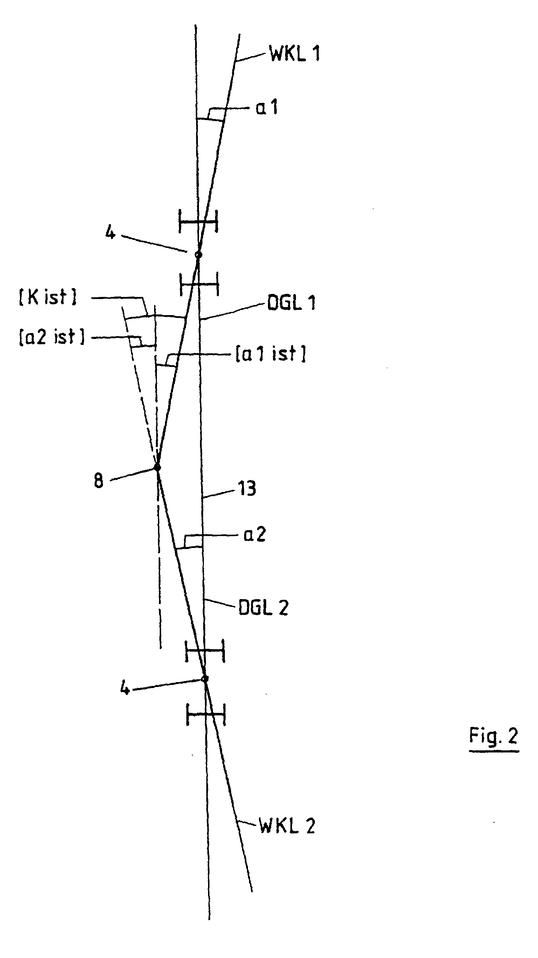

Bei einer Konstellation gemäß Figur 2 steht ein zweigliedriges Schienenfahrzeug auf einer geraden Gleisstrecke 13. Dabei befindet sich der Wagen 2 im Schubbetrieb, so daß das Knickgelenk 8 und damit die Wagenkastenlängsachsen WKL 1 und WKL 2 gegenüber den in einer Flucht mit der Gleisstrecke 13 liegenden Drehgestellängsachsen DGL1 und DGL2 seitlich ausgelenkt werden. Der Verdrehwinkelgeber 6 am vorauslaufenden Wagen 1, 4 registriert hierbei einen positiven Verdrehwinkel A1, während der Verdrehwinkelgeber 6 am zweiten Wagen 2, 4 einen im Betrag geich großen negativen Verdrehwinkel A2 registriert, nachdem die Wagenkastenlängsachse WKL2 im Gegensatz zur Wagenkastenlängsachse WKL 1 im Gegenuhrzeigersinn gegenüber der Drehgestellängsachse 1 verdreht ist. Der aktuelle Knickwinkel nimmt daher definitionsgemäß einen positiven Knickwinkelwert K-Ist an, der gemäß Figur 1 der Summe der Absolutwerte der Verdrehwinkel A1-Ist und A2-Ist entspricht. Für den Knickwinkel K-Soll ergibt sich demnach gemäß der formel-mäßigen Bedingung der Wert Null. Der oder die Aktoren 10 oder 11 müssen daher so gesteuert werden, daß der Knickwinkel zum Wert null hingeführt wird, die Wagenkastenlängsachsen 1 und 2 also in einer Flucht mit den Drehgestellängsachsen 1 und 2 und damit bei geradem Gleis 13 auch zu dessen Längsachse parallel liegen.

Werden als Aktoren nur steuerbare Dämpfungselemente verwendet, dann werden bereits dann, wenn eine Auslenkung des Knickgelenks 8 zur Seite hin beginnt, die Aktoren 10 auf hohe Dämpfungswerte geschaltet, so daß ein seitliches Auslenken des Knickgelenks praktisch unterbunden wird. Eine Rückstellung des Knickgelenks erfolgt im Betrieb beispielsweise selbsttätig dann, wenn der Schubbetrieb des Wagens 2 endet oder der voraus-laufende Wagen zieht oder weniger stark gebremst wird. Die Rückstellkräfte der Sekundärfedern 5 unterstützen das Rückdrehen der Wagenkastenlängsachsen in die Flucht mit den Drehstellängsachsen, wobei bei einer auf den Knickwinkel-Sollwert hinlaufenden Änderung des aktuell gemessenen Knickwinkel-Istwertes K ist die Dämpfungswirkung der Aktoren 10 zweckmäßig ganz aufgehoben werden kann. In entsprechender Weise können auch die Aktoren 11 zwischen Drehgestell 4 und zugehörigem Wagenkasten 1 und/oder 2 einer vom Sollwert weglaufenden Änderung durch Bedämpfung der Verdrehung entgegenwirken. Wenn diese Dämpfungsmaßnahmen nicht ausreichen, kann die Steuereinheit 7 zusätzlich ein Abbremsen des zweiten Wagens 2, 4 oder ein Beschleunigen des ersten, vorauslaufenden Wagens 1, 4 anweisen oder über Antriebsmotoren der Drehgestelle steuern. Werden aktiv krafteinleitende Aktoren 10 und/oder 11 verwendet, können die notwendigen Kraftkomponenten zur Hinführung des Knickwinkel-Istwertes auf den Knickwinkel-Sollwert aktiv gesteuert werden.

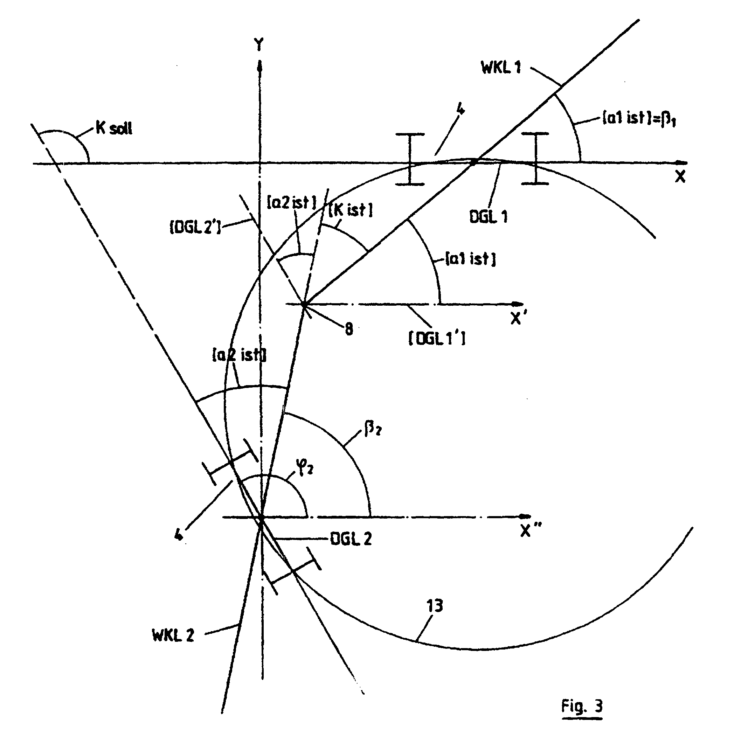

Bei ziehendem Betrieb des ersten Wagens 1, 4 auf einem gleichmäßig gekrümmten Gleisstück 13 besteht die Gefahr, daß der Knickwinkel-Istwert K-Ist einen zu kleinen Wert annimmt, so daß gemäß Figur 3 die freien Enden der beiden Wagenkästen 1 und 2 nach bogenaußen und die mittleren Wagenenden mit dem Knickgelenk 8 nach bogeninnen schwenken und damit den Lichtraumbedarf vergrößern. Aus der hinsichtlich der geometrischen Verhältnisse zur Verdeutlichung der Funktion überzeichnet dargestellten geometrischen Gegebenheiten ergibt sich, daß der Knickwinkel K-Ist wesentlich kleiner als der Sollwert K-Soll ist, der sich am Schnittpunkt der verlängerten Drehgestellängsachsen DGL1 und DGL2 ergibt. Dieser Knickwinkel-Sollwert ergibt sich unter Berücksichtigung von durch das Drehgelenk 8 gelegten parallelen Linien zu den Drehgestellängsachsen gemäß Figur 3 als Summe der Absolutwerte des Knickwinkel-Istwerts K-Ist und der Verdrehwinkel A1 und A2. Das Steuergerät 7 gibt somit an die Aktoren 10, 11 in diesem Falle Steuersignale aus, die eine Vergrößerung des aktuell gemessenen Knickwinkels bewirken. Sofern die Vergrößerung des aktuellen Knickwinkel-Istwertes nicht durch Verzögerung am vorauslaufenden Wagen 1, 4 oder Beschleunigen des zweiten Wagens 2, 4 ausgeführt wird, müssen aktive Kraftkomponente der Aktoren 10 das Knickgelenk verstärkt knicken oder die Aktoren 11 eine Rückdrehung der Wagenkästen gegenüber den Drehgestellen bewerkstelligen bzw. können beide Maßnahmen zugleich gesteuert werden. Dabei ist zu beachten, daß in der Praxis Winkelwerte in der in Figur 3 dargestellten Größe nicht auftreten können, da der Verdrehwinkel A in der Regel klein ist und die Gleisbogenkrümmung im Vergleich zu den Drehgestellabmessungen einen wesentlich größeren Radius aufweist.

Die Iststellung der Wagenkästen ergibt sich aus dem Knickwinkel K und den Verdrehwinkeln a, wie sie durch den Knickwinkelgeber 9 bzw. die Verdrehwinkelgeber 6 tatsächlich gemessen und als insbesondere elektrische Istwert-Signale K bzw. V ausgegeben und an die Steuereinheit 7 zur Weiterverarbeitung geleitet werden. In der Steuereinheit werden die Istwert-Signale mit dem daraus abgeleiteten bzw. berechneten Knickwinkel-Sollwertsignal verglichen und abhängig davon eine Steuerung der Aktoren 10 und ggfs 11 durchgeführt. Dabei können die Aktoren 10, 11 so gesteuert werden, daß bei Istwert-Signalen, die dem Sollwert nacheilen, die aus der Fehrzeugdynamik herrührenden Knick-/ bzw. Verdrehkräfte zwischen den zugehörigen Wagenkästen bzw. Drehgestell und Wagenkasten so unterstützt werden, daß die Istwert-Signale sich den Sollwert-Signalen annähern bzw. daß sie beim Überschwingen der Istwerte über den Sollwert hinaus in gegenläufiger Richtung gesteuert werden. Werden die Aktoren dagegen nur als Dämpfungselemente ausgebildet, ist eine aktive Unterstützung der Drehbewegungen zur schnelleren Annäherung der Istwerte an die Sollwerte nicht möglich, jedoch wird dann, wenn der Istwert den Sollwert erreicht hat und anschließend vom Sollwert wegläuft, eine Bedämpfung der entsprechenden Wagenkastenbewegung bewirkt. Sobald wieder eine Annäherung des Istwertes an den Sollwert erfolgt, wird diese Bedämpfung aufgehoben, damit sich der Knickwinkel dem Sollknickwinkel möglichst ungehindert annähern kann.Bewegt sich der Istwert zu schnell auf den Sollwert zu, sodaß ein überschwingen zu erwarten ist, wird die Istwertänderung durch das Einschalten der Dämpfungswirkung kurz vor Erreichen des Sollwertes abgebremst.

Die Aktor-Anordnung 10, 11 weist vorzugsweise je zwei symmetrisch zum Knickgelenk 9 und/oder zu den Drehgestellen 4 angeordnete Aktorelemente auf. Während die Aktoren 11 zwischen Drehgestell 4 und Wagenkasten 1 bzw. 2 vorliegend jeweils gleichsinnig arbeiten müssen, um eine symmetrische Verdrehung gegenüber dem zugehörigen Wagenkasten zu erreichen und daher je Drehgestell an einem gemeinsamen Ausgang S 1/S 2, S 3/S 4 der Steuereinheit 7 angeschlossen werden können, müssen die Aktor-Elemente 10 im Bereich des jeweiligen Knickgelenks 9 aufgrund ihrer Anordnung in einer waagerechten Ebene jeweils neben dem Knickgelenk im gegenläufigen Sinne gesteuert werden. Es muß also beim Strecken des einen Aktor-Elements 10 das andere entweder wirkungslos oder im Sinne einer Verkürzung der axialen Länge gesteuert werden. Bei einer Steuerung der Wagenkästen durch Beeinflussung des Knickwinkels zwischen den Wagenkastenlängsachsen, ggf. unter Zuhilfenahme der Steuerung der Drehgestelle gegenüber den Wagenkästen, erreicht somit die Wagenkastenstellung zueinander eine weitgehend dem statischen Betrieb angenäherte Zuordnung im dynamischen Fahrbetrieb. Das Schienenfahrzeug erfordert dann in Bezug auf den tatsächlichen Gleistrassenverlauf nur einen zumindest angenähert idealen Lichtraumbedarf und hält denselben insbesondere dann ein, wenn Fehlfunktionen an Brems- und/oder Antriebselementen oder andere Einflußfaktoren zu einem Schubbetrieb mit Ausknickung des Kuppelgelenks führen könnten oder Zugkräfte bei Bogenfahrt den Knickwinkel zu klein werden lassen würden.

**Patentansprüche**

1. Schienenfahrzeug mit zwei über ein einachsiges, um eine senkrechte Achse schwenkbares Knickgelenk (8) gekuppelten Wagenkästen (1, 2), die jeweils über elastische Federelemente (5) auf einem im Längsmittenbereich des Wagenkastens (1, 2) angeordneten mehrachsigen Drehgestell (4) aufsitzen, und mit Steuermitteln (6, 7, 9) zur Erfassung des Drehwinkels (11, 12) zwischen Wagenkasten (1, 2) und Drehgestell (4) sowie des Knickwinkels (K) am Knickgelenk (8) und mit steuerbaren Stellgliedern (10, 11) zur Beeinflussung des Knickwinkels (K), der abhängig von den Steuermitteln (6, 7, 9) gemäß der Beziehung

$$K\text{-Soll} = K\text{-Ist} + A2\text{-ist} - A1\text{-Ist}$$

gesteuert ist, wobei

K-Soll der Sollwert des Knickwinkels,
K-Ist der aktuelle Istwert des Knickwinkels,
A1-Ist der aktuelle Drehwinkel zwischen dem in Fahrtrichtung vorlaufenden Drehgestell und dem zugehörigen Wagenkasten und
A2-ist der aktuelle Drehwinkel zwischen dem in Fahrtrichtung nachlaufenden Drehgestell und dem zugehörigen Wagenkasten ist, **dadurch gekennzeichnet, daß** zusätzlich oder alternativ zu den Stellgliedern (10) am Knickgelenk (8) weitere Stellglieder (11) zumindest zwischen einem der Wagenkästen (1, 2) und dem zugehörigen Drehgestell (4) vorgesehen sind und daß die Stellglieder (10, 11) steuerbare Dämpferelemente sind.

2. Verwendung mehrerer Schienenfahrzeuge nach Anspruch 1, die miteinander über je eine Koppelstange verbunden sind, welche an benachbarten Wagenkästen je ein Gelenk aufweist.

3. Verfahren zur Steuerung des Knickwinkels bei einem Schienenfahrzeug nach Anspruch 1, bei dem die aktuellen Verdrehwinkel zwischen den Drehgestellen und dem jeweils zugehörigen Wagenkasten sowie der aktuelle Knickwinkel am Knickgelenk gemessen werden und der Knickwinkel durch Krafteinwirkung auf das Knickgelenk entsprechend der Summe aus dem aktuellen Knickwinkel, dem aktuellem Verdrehwinkel zwischen dem in Fahrtrichtung nachlaufenden Drehgestell und Wagenkasten sowie dem aktuellen negierten Verdrehwinkel zwischen dem in Fahrtrichtung ersten Drehgestell und dem zugehörigen Wagenkasten gesteuert wird, **dadurch gekennzeichnet, daß** aus den aktuell gemessenen Verdrehwinkeln der arithmetische Mittelwert gebildet wird und daß zumindest ein Verdrehwinkel auf den arithmetischen Mittelwert hin gesteuert wird.

4. Verfahren nach Anspruch 3, **dadurch gekennzeichnet, daß** der Knickwinkel des Knickgelenks mittels zugeordneter Stellglieder in Abhängigkeit vom Knickwinkel-Sollwert verändert wird.

5. Verfahren nach Anspruch 4, **dadurch gekennzeichnet daß**, die Stellglieder auf hohe Dämpfungswerte geschaltete werden, wenn der Knickwinkel-Ist-Wert vom Knickwinkel-Soll-Wert wegläuft.

**Claims**

1. Rail vehicle having two wagon bodies (1, 2) which are coupled by means of a single-axle articulated joint (8) which can pivot about a vertical axis and which are each seated, by means of elastic spring elements (5), on a multi-axle bogie (4) which is arranged in the longitudinal centre region of the wagon body (1, 2), and having control means (6, 7, 9) for sensing the angle of rotation (11, 12) between the wagon bodies (1, 2) and the bogie (4) as well as for sensing the articulation angle (K) at the articulated joint (8), and having controllable actuator elements (10, 11) for influencing the articulation angle (K) which is controlled as a function of the control means (6, 7, 9) in accordance with the relationship:

$$K\text{-setpoint} = K\text{-actual} + A2\text{-actual} - A1\text{-actual}$$

Where

K-setpoint is the setpoint value of the articulation angle,
K-actual is the current actual value of the articulation angle,
A1-actual is the current angle of rotation between the bogie at the front in the direction of travel and the associated wagon body, and
A2-actual is the current angle of rotation between the bogie at the rear in the direction of travel and the associated wagon body, **characterized in that**, in addition to or as an alternative to the actuator elements (10) on the articulation joint (8), further actuator elements (11) are provided between one of the wagon bodies (1, 2) and the associated bogie (4), and **in that** the actuator elements (10, 11) are controllable damper elements.

2. Use of a plurality of rail vehicles according to Claim 1, which are coupled to one another by means of, in each case, one coupling rod which has, in each case, one joint on adjacent wagon bodies.

3. Method for controlling the articulation angle in a rail vehicle according to Claim 1, in which the current angle of rotation between the bogies and the respectively associated wagon body and the current articulation angle at the articulated joint are measured, and the articulation angle is controlled by applying force to the articulated joint in accordance with the sum of the current articulation angle, the current angle of rotation between the bogie which is at the rear in the direction of travel and the wagon body, and the current negated angle of rotation between the first bogie in the direction of travel and the associated wagon body, **characterized in that** the arithmetical mean value is formed from the currently measured angles of rotation, and **in that** at least one angle of rotation is adjusted to the arithmetical mean value.

4. Method according to Claim 3, **characterized in that** the articulation angle of the articulated joint is varied by means of associated actuator elements as a function of the setpoint value of the articulation angle.

5. Method according to Claim 4, **characterized in that** the actuator elements are connected to high damping values if the actual value of the articulation angle runs away from the setpoint value of the articulation angle.

**Revendications**

1. Véhicule ferroviaire comprenant deux wagons (12) accouplés par le biais d'une articulation pivotante (8) à un axe, pouvant pivoter autour d'un axe vertical, lesquels reposent chacun sur des éléments à ressort élastiques (5) sur un bogie (4) à plusieurs essieux disposé dans la région médiane longitudinale du wagon (1, 2), et comprenant des moyens de commande (6, 7, 9) pour détecter l'angle de rotation (11, 12) entre le wagon (1, 2) et le bogie (4) ainsi que l'angle d'inflexion (K) sur l'articulation pivotante (8), et comprenant des organes de réglage commandables (10, 11) pour influencer l'angle d'inflexion (K), qui est commandé en fonction des moyens de commande (6, 7, 9) suivant la relation

$$K\text{-Consigne} = K\text{-Réelle} + A2\text{-Réel} - A1\text{-Réel},$$

K-Consigne étant la valeur de consigne de l'angle d'inflexion,
K-Réelle étant la valeur instantanée réelle de l'angle d'inflexion,
A1-Réel étant l'angle de rotation instantané entre le premier bogie dans le sens de l'avance et le wagon associé et
A2-Réel étant l'angle de rotation instantané entre le deuxième bogie dans le sens de l'avance et le wagon associé, **caractérisé en ce que**, en plus ou à la place des organes de réglage (10) sur l'articulation pivotante (8), d'autres organes de réglage (11) sont prévus au moins entre l'un des wagons (1, 2) et le bogie associé (4), et **en ce que** les organes de réglage (10, 11) sont des éléments amortisseurs commandables.

2. Utilisation de plusieurs véhicules ferroviaires selon la revendication 1, qui sont connectés les uns aux autres à chaque fois par une barre de liaison qui présente à chaque fois une articulation sur les wagons adjacents.

3. Procédé de commande de l'angle d'inflexion dans un véhicule ferroviaire selon la revendication 1, dans lequel les angles de rotation instantanés entre les bogies et le wagon à chaque fois associé ainsi que l'angle d'inflexion instantané au niveau de l'articulation pivotante sont mesurés et l'angle d'inflexion est commandé par influence d'une force sur l'articulation pivotante en fonction de la somme de l'angle d'inflexion instantané, de l'angle de rotation instantané entre le deuxième bogie dans le sens de l'avance et le wagon, ainsi que de l'angle de rotation négatif instantané entre le premier bogie dans le sens de l'avance et le wagon associé, **caractérisé en ce que** l'on obtient la moyenne arithmétique à partir des angles de rotation instantanés mesurés et **en ce que** l'on commande au moins un angle de rotation vers la moyenne arithmétique.

4. Procédé selon la revendication 3, **caractérisé en ce que** l'angle d'inflexion de l'articulation pivotante est modifié au moyen d'organes de réglage associés en fonction de la valeur de consigne de l'angle d'inflexion.

5. Procédé selon la revendication 4, **caractérisé en ce que** les organes de réglage sont commutés sur des valeurs d'amortissement élevées lorsque la valeur réelle de l'angle d'inflexion s'éloigne de la valeur de consigne de l'angle d'inflexion.

Fig. 1

Steuereinheit

WKL 1

a1

4

[K ist]

[a2 ist]

DGL 1

[a1 ist]

8

13

a2

DGL 2

4

WKL 2

Fig. 2

Fig. 3